# EUROPÄISCHE PATENTSCHRIFT

(11) **EP 2 397 378 B1**
(45) Veröffentlichungstag und Bekanntmachung des Hinweises auf die Patenterteilung: **02.11.2016**
(21) Anmeldenummer: 11169117.6
(22) Anmeldetag: 08.06.2011
(51) Int. Cl.: B60R 21/38

(54) **Spannelement für eine Halteeinrichtung eines Scharniers sowie Scharnier für eine Fronthaube mit einem solchen Spannelement**
Tensioning element for a holder device of a hinge and hinge for a front bonnet with such a tensioning element
Elément de serrage pour un dispositif de retenue d'une charnière et charnière pour un capot avant doté d'un tel élément de serrage

(30) Priorität: 18.06.2010 DE 102010030273
(43) Veröffentlichungstag der Anmeldung: 21.12.2011
(73) Patentinhaber: Bayerische Motoren Werke Aktiengesellschaft, 80809 München (DE); Edscha Engineering GmbH, 42855 Remscheid (DE)
(72) Erfinder: Koestler, Ulrich, 85241 Hebertshausen (DE); Lubowicki, Jan, 42327 Wuppertal (DE); Steigerwald, Sergej, 41569 Rommerskirchen (DE); Stolltenhoff, Uwe, 58300 Wetter (DE)

(56) Entgegenhaltungen:
- EP-A2- 1 179 458

## Beschreibung

Die Erfindung betrifft ein Scharnier für eine Fronthaube eines Kraftwagens gemäß dem Oberbegriff des Patentanspruchs 1

Die DE 20 2009 010 054 U1 offenbart einen Scharnierbeschlag, mittels welchem eine Fronthaube eines Kraftfahrzeugs aus einer Schließlage in eine Öffnungslage aufschwenkbar ist. Der Scharnierbeschlag umfasst einen Stellhebel, welcher an einem haubenseitigen Auflager über eine Anlenkstelle angelenkt ist. Des Weiteren ist der Stellhebel durch ein auftrennbares Verbindungsmittel in Form eines Bolzens fest mit dem haubenseitigen Auflager verbunden. Es ist dabei ein auf das haubenseitige Auflager wirkender Aktor vorgesehen, wobei bei einer entsprechenden Belastung des haubenseitigen Auflagers das Verbindungsmittel bricht und das haubenseitige Auflager um die Anlenkstelle in eine Personenschutzstellung schwenkbar ist, so dass die Fronthaube angehoben wird.

Dieser Scharnierbeschlag weist eine nur unzureichende Funktionserfüllung auf, insbesondere über eine hohe Lebensdauer mit hohen Belastungen hinweg.

Es ist daher Aufgabe der vorliegenden Erfindung, ein Scharnier für eine Fronthaube eines Kraftwagens mit einem Spannelement bereitzustellen, so dass das Scharnier eine sehr gute Funktionserfüllung aufweist.

Diese Aufgabe wird durch ein Scharnier mit den Merkmalen des Patentanspruchs 1 gelöst. Vorteilhafte Ausgestaltungen mit zweckmäßigen und nicht-trivialen Weiterbildungen der Erfindung sind in den abhängigen Ansprüchen angegeben.

Über ein Spannelement für eine Halteeinrichtung eines zwei gelenkig miteinander verbundene und zwischen einer Normalstellung und einer Schutzstellung relativ zueinander bewegbare Klappenteile umfassenden Scharniers für eine Fronthaube eines Kraftwagens sind die beiden Klappenteile in der Normalstellung unter Beaufschlagung mit einer Haltekraft zwischen den Klappenteilen gegenseitig fixierbar. Dabei ist zur Aufhebung der Haltekraft der Halteeinrichtung zwischen den Klappenteilen eine Klemmlänge des Spannelements reduzierbar. Das Spannelement stellt zur gegenseitigen Fixierung der Klappenteile in der Normalstellung eine Klemmlänge bereit, wodurch die Klappenteile über diese Klemmlänge hinweg in der Normalstellung gegenseitig fixiert sind. Um nun die Klappenteile von der Normalstellung in die Schutzstellung zu bewegen, ist diese Klemmlänge reduzierbar, wodurch die Haltekraft und damit die gegenseitige Fixierung der Klappenteile zueinander aufgehoben werden.

Das Spannelement ermöglicht somit einerseits, die beiden Klappenteile gegenseitig mit einer besonders hohen Haltekraft zu fixieren und somit besonders fest in der Normalstellung zu halten, was der Funktionserfüllung des Scharniers insofern zuträglich ist, als die Klappenteile auch über eine sehr hohe Lebensdauer des Scharniers mit gegebenenfalls hohen Belastungen hinweg in der Normalstellung zu halten sind und sich nicht unerwünscht relativ zueinander, beispielsweise in die Schutzstellung, bewegen können. Andererseits ermöglicht es das erfindungsgemäße Spannelement, diese gegebenenfalls sehr hohe Haltekraft zur gegenseitigen Fixierung der Klappenteile mit einer demgegenüber geringen, aufzuwendenden Betätigungskraft infolge der Reduzierung der Klemmlänge aufzuheben. Dadurch können die Klappenteile mit einer insgesamt nur relativ geringen Betätigungskraft von der Normalstellung in die Schutzstellung bewegt werden. Somit gewährleistet das Spannelement die Bewegung der Klappenteile in die Schutzstellung in besonders kurzer Zeit, was der Schutzwirkung des Scharniers zu Gute kommt.

Dabei kann beispielsweise insbesondere ein Stellglied, wie beispielsweise ein pyrotechnischer Aktor, einer Betätigungseinrichtung des Scharniers gering in dessen Ausmaßen bzw. Dimensionen sowie in dessen Leistung ausgelegt werden, was die Kosten sowie das Gewicht des Scharniers und damit des gesamten Kraftwagens in einem geringen Rahmen hält. Das geringe Gewicht kommt insbesondere einem Energiebedarf des Kraftwagens zugute, woraus beispielsweise ein geringer Kraftstöffverbrauch sowie geringe CO₂-Emissionen resultieren.

Bei der Bewegung der Klappenteile in die Schutzstellung wird dabei die mit dem Scharnier verbundene Fronthaube insbesondere in einem einer Windschutzscheibe des Kraftwagens zugewandten Kantenbereich der Fronthaube und damit in einem Bereich einer A-Säule des Kraftwagens in Fahrzeughochrichtung zumindest im Wesentlichen nach oben angehoben und ggf. in Fahrzeuglängsrichtung bezogen auf die Vorwärtsfahrtrichtung leicht nach vorne verschwenkt. Diese Bewegung in die Schutzstellung wird beispielsweise dann durchgeführt, wenn mittels einer Erfassungseinrichtung eine unfallbedingte Kraftbeaufschlagung oder eine drohende, nicht mehr zu vermeidende unfallbedingte Kraftbeaufschlagung im Falle einer Kollision des Kraftwagens mit einem Fußgänger durchgeführt. Das geschilderte Aufstellen der Fronthaube vermeidet einen Aufprall des Fußgängers, insbesondere seines Kopfes, auf in Fahrzeughochrichtung unterhalb der Fronthaube angeordnete Komponenten des Kraftwagens.

In einer vorteilhaften Ausführungsform der Erfindung umfasst das Spannelement zwei zueinander korrespondierende Spannteile, wobei die Klemmlänge des Spannelements durch eine Relativbewegung der Spannteile zueinander reduzierbar ist. Diese separat zu den Klappenteilen ausgebildeten Spannteile ermöglichen die feste und gegenseitige Fixierung der Klappenteile sowie eine besonders unaufwändige Aufhebung dieser Fixierung. Darüber hinaus sind sie nach der Aufhebung der Fixierung und der Bewegung der Klappenteile in die Schutzstellung auf einfache Art und Weise und damit zeit- und kostengünstig ersetzbar und durch neue Spannelemente zu ersetzen, ohne das Scharnier beschädigen oder zerstören oder ganze Klappenteile austauschen zu müssen. Ein solcher Austausch der Spannteile kann nach Aufheben der Fixierung und nach der Bewegung der Klappenteile in die Schutzstellung erforderlich sein, da an den Spannteilen infolge der Relativbewegung zueinander Verschleißerscheinungen auftreten können und nur neue Spannteile die gewünschte und besonders feste gegenseitige Fixierung der Klappenteile gewährleisten können.

Vorteilhafterweise ist die Klemmlänge durch eine Relativdrehung der Spannteile zueinander reduzierbar. Dies ermöglicht es, die Klemmlänge zu reduzieren, indem die Spannteile einen nur sehr geringen Weg relativ zueinander zurücklegen müssen, als es beispielsweise im Vergleich zu einer translatorischen Bewegung der Fall sein kann. Dies bedeutet weiterhin, dass somit die Klemmlänge in nur sehr kurzer Zeit reduzierbar ist, wodurch auch die gegenseitige Fixierung der Klappenteile in nur sehr kurzer Zeit aufhebbar und die Klappenteile in die Schutzstellung bewegbar sind. Dies beeinflusst die Funktionserfüllung des Scharniers zur Bereitstellung der Schutzstellung weiter positiv.

In einer weiteren Ausführungsform weisen die Spannteile jeweils zumindest eine Verzahnung auf, welche in einer ersten Relativposition der Spannteile zueinander stirnseitig aneinander anliegen und welche zum Reduzieren der Klemmlänge durch Drehen der Spannteile relativ zueinander in eine weitere Relativposition in Eingriff miteinander bewegbar sind. In der ersten Relativposition der Spannteile zueinander befinden sich die Verzahnungen nicht im Eingriff miteinander, sondern sind aneinander über jeweilige Flächen, welche zumindest im Wesentlichen senkrecht zur axialen Richtung der Spannteile verlaufen, abgestützt, um eine gewünschte Klemmlänge zur gegenseitigen Fixierung, insbesondere zur gegenseitigen Verspannung, der Scharniersteile bereitzustellen. Werden die Spannteile relativ zueinander gedreht, so gleiten die Flächen, über welche die Verzahnungen aneinander abgestützt sind, aneinander ab, wodurch die Verzahnungen in Eingriff miteinander kommen. Die Verzahnungen liegen nun nicht mehr stirnseitig Zahn an Zahn aneinander an, sondern vielmehr greift ein Zahn bzw. greifen die Zähne der einen Verzahnung in eine entsprechende Zahnlücke bzw. in Zahnlücken der anderen Verzahnung ein. Dadurch sind die Spannteile in axialer Richtung der Spannteile aufeinander zu bewegt bzw. unmittelbar zeitlich nach dem Drehen relativ aufeinander zu bewegbar, woraus die Verkürzung der Klemmlänge resultiert.

Dies geht einher mit der Aufhebung der gegenseitigen Fixierung, insbesondere der gegenseitigen Verspannung, der Klappenteile und damit mit der Aufhebung der Haltekraft, wodurch die Klappenteile auf einfache Art und Weise in die Schutzstellung bewegbar sind. Diese Ausführungsform gewährleistet zum einen eine besonders feste, gegenseitige Fixierung der Klappenteile und andererseits eine besonders unaufwändige und schnelle Aufhebung dieser Fixierung, was der Funktionserfüllung des Scharniers zu Gute kommt. Die Reduzierung der Klemmlänge kann somit als gewünschtes und bewusst auszuführendes Setzverhalten angesehen werden, wodurch die Haltekraft zwischen den Klappenteilen aufgehoben ist und die Klappenteille unter Aufwendung einer nur geringen Betätigungskraft relativ zueinander bewegbar sind.

In einer weiteren Ausführungsform der Erfindung weist zumindest eines der Spannteile wenigstens einen Anschlag auf, mittels welchem eine Relativbewegung der Spannteile zueinander in wenigstens einer Raumrichtung verhinderbar ist. Dies vermeidet eine unbeabsichtigte Aufhebung der Haltekraft zwischen den Klappenteilen, was insbesondere im Rahmen einer Montage des Scharniers vorteilhaft ist, bei welcher die Klappenteile gegenseitig fixiert werden. Werden die Klappenteile beispielsweise mittels einer Schraube gegenseitig fixiert und miteinander verspannt, so weist die Schraube bekanntermaßen eine Drehrichtung auf, in welche sie gedreht werden muss, um die Klappenteile miteinander zu verspannen. Stützt sich dabei beispielsweise ein Schraubenkopf zumindest mittelbar an einem der Spannteile an, so ist es gegebenenfalls möglich - falls keine anderweitigen Vorkehrungen getroffen sind -, dass bei einem Anziehen der Schraube in die entsprechende Drehrichtung der Schraubenkopf infolge eines zumindest mittelbaren Reibschlusses zwischen dem Schraubenkopf und dem Spannteil das Spannteil mit dreht und es somit zu einer Relativdrehung zwischen dem mit gedrehten Spannteil und dem anderen der Spannteile kommt. Dies würde zu einer unerwünschten Verkürzung der Klemmlänge führen oder dazu, dass die gegebenenfalls vorhandenen Verzahnungen in einer Relativposition zueinander ausgerichtet sind, in welcher sie nur eine unzureichende Verspannkraft zwischen den Klappenteilen abstützen können und die Gefahr besteht, dass sie infolge von mechanischen Belastungen, insbesondere Schwingungen, weiter zueinander relativ gedreht werden, so dass die Haltekraft vollends unerwünscht aufgehoben wird.

Diese geschilderte Problematik ist durch den Anschlag vermieden, wobei vorteilhaft bei einer entsprechenden Ausführungsform des Spannelements der Anschlag eine Relativdrehung der Spannteile zueinander in die Drehrichtung verhindert, in welche die Schraube zur Verspannung der Klappenteile miteinander zu drehen und festzuziehen ist.

Weist zumindest eines der Spannteile wenigstens eine Verdrehsicherung auf, mittels welcher eine Relativdrehung des Spannteils zu wenigstens einem der Klappenteile verhinderbar ist, so birgt dies den Vorteil, dass dadurch eine definierte Positionierung dieses Spannteils zu dem entsprechenden Kläppenteil gegeben ist, so dass die Klemmlänge. besonders effizient verkürzbar ist. Dabei ist es lediglich erforderlich, das andere der Spannteile um einen nur geringen Relativweg zu dem die Verdrehsicherung aufweisenden Spannteil zu drehen, um die Klemmlänge zu verkürzen und die Haltekraft aufzuheben. Die Verdrehsicherung vermeidet somit ein unerwünschtes und undefiniertes Mitdrehen des die Verdrehsicherung aufweisenden Spannteils mit dem anderen Spannteil. Dies wirkt sich weiterhin positiv auf die Funktionserfül-. lung des Scharniers aus.

Zur Erfindung gehört auch ein Scharnier für eine Fronthaube eines Kraftwagens, mit einem ersten Klappenteil und mit zumindest einem zweiten Klappenteil, welche gelenkig miteinander verbunden und zwischen einer Normalstellung und einer Schutzstellung relativ zueinander bewegbar sind, mit einer Halteeinrichtung, mittels welcher die Klappenteile in der Normalstellung gehalten sind, und mit zumindest einer Betätigungseinrichtung, mittels welcher eine Bewegung der Klappenteile von der Normalstellung in die Schutzstellung bewirkbar ist. Das erfindungsgemäße Klappenteil zeichnet sich dadurch aus, dass die beiden Klappenteile in der Normalstellung über ein Spannelement der Halteeinrichtung unter Beaufschlagung mit einer Haltekraft zwischen den Klappenteilen gegenseitig fixiert sind, wobei zur Aufhebung der Haltekraft der Halteeinrichtung zwischen den Klappenteilen eine Klemmlänge des Spannelements reduzierbar ist. Vorteilhafterweise ist das Spannelement als erfindungsgemäßes Spannelement ausgebildet.

Somit ermöglicht das Spannelement des erfindungsgemäßen Scharniers eine besonders feste gegenseitige Fixierung der Klappenteile durch eine besonders hohe Haltekraft sowie eine besonders unaufwändige Aufhebung dieser Haltekraft mit einer im Vergleich zur Haltekraft nur gering aufzuwendenden Betätigungskraft. Daraus resultiert eine sehr gute Funktionserfüllung des erfindungsgemäßen Scharniers, bei welchem die Klappenteile die Schutzstellung in besonders kurzer Zeit bereitstellen können, sowie in der Normalstellung besonders fest auch über eine hohe Lebensdauer mit hohen mechanischen Belastungen hinweg gehalten sind.

Die Halteeinrichtung umfasst beispielsweise ein Schraubelement, insbesondere eine Schraube, mittels welcher die Klappenteile in der Normalstellung gegenseitig verspannt und damit gegenseitig fixiert sind. Ist die Klemmlänge des Spannelements beispielsweise durch eine Drehung des Spannelements oder durch die Drehung eines der Spannteile des Spannelements reduzierbar, so ist diese Drehrichtung zur Reduzierung der Klemmlänge vorteilhafterweise gegenläufig zu der Drehrichtung, in welche das Schraubelement, insbesondere die Schraube, zu drehen ist, um diese festzuziehen und damit die Klappenteile gegenseitig zu fixieren. Mit anderen Worten handelt es sich bei der Drehrichtung zur Reduzierung der Klemmlänge um die Drehrichtung des Schraubelements, insbesondere der Schraube, in welche das Schraubelement, insbesondere die Schraube, zu drehen ist, um es bzw. sie lose zu schrauben um die gegenseitige Fixierung der Klappenteile aufzuheben bzw. zu lockern.

Dies ist insofern vorteilhaft, als dadurch ein Festziehen bzw. ein Nachstellen des Schraubelements, insbesondere der Schraube, bei der Reduzierung der Klemmlänge vermieden ist. Dies stellt sicher, dass die Haltekraft und damit die gegenseitige Fixierung der Klappenteile aufgehoben ist. Dies ist insbesondere dann vorteilhaft, wenn die Betätigungseinrichtung einen Mitnehmer aufweist, mit welchem das Spannelement oder eines der Spannteile des Spannelements zumindest in Normalstellung drehfest verbunden ist und an welchem beispielsweise ein Schraubenkopf des Schraubelements, insbesondere der Schraube, abgestützt ist. Wird der Mitnehmer zum Drehen des Spannelements bzw. des Spannteils bewegt, sodass die Klemmlänge reduziert wird, so kann der Mitnehmer unter Umständen infolge eines Reibschlusses zwischen dem Mitnehmer und dem Schraubenkopf das Schraubelement bzw. die Schraube mit drehen und so gegebenenfalls zu einem Festziehen des Schraubelements bei der Reduzierung der Klemmlänge führen. Dies ist durch die geschilderte Ausgestaltung der Drehrichtungen des Schraubelements und des Spannelements bzw. des Spannteils vermieden.

In einer besonders vorteilhaften Ausführungsform des Scharniers ist die Haltekraft der Halteeinrichtung zwischen den Klappenteilen aufhebbar, bevor eine Bewegung der Klappenteile relativ zueinander erfolgt. Dadurch ist eine Funktionstrennung realisiert, bei welcher ein Aufwenden einer Betätigungskraft zum Aufheben der Haltekraft zwischen den Klappenteilen getrennt ist von einem Aufwenden einer Betätigungskraft zum Bewegen der Klappenteile in die Schutzstellung. Mit anderen Worten wird die gegenseitige Fixierung der Klappenteile zunächst aufgehoben, zeitlich bevor sich die Klappenteile relativ zueinander bewegen. Dies ermöglicht es, die Klappenteile mit einer besonders hohen Haltekraft gegenseitig zu fixieren und dem gegenüber eine nur geringe Betätigungskraft aufwenden zu müssen, um diese Fixierung aufzuheben. Des Weiteren kann auch die zeitlich zweite, aufzuwendende Betätigungskraft zum Bewegen der Klappenteile in die Schutzstellung besonders gering gehalten werden, da zum Zeitpunkt des Bewegens der Klappenteile relativ zueinander die Haltekraft zwischen den Klappenteilen bereits aufgehoben ist.

Die Betätigungseinrichtung beispielsweise ein Stellglied umfassen, mittels welchem die Haltekraft aufhebbar ist. Dieses Stellglied kann aufgrund der nur geringen, aufzuwendenden Betätigungskraft gering hinsichtlich seiner Dimensionen sowie seiner Leistung ausgelegt werden, was die Kosten und das Gewicht sowie den Energiebedarf des Stellglieds sowie des Scharniers gering hält. Ferner kann vorgesehen sein, dass die Klappenteile mittels dieses Stellglieds auch in die Schutzstellung bewegt werden, und zwar zeitlich nach der Aufhebung der Haltekraft mittels des Stellglieds.

Ebenso ist möglich, dass die Betätigungseinrichtung zwei Stellglieder umfasst, wovon eines der Stellglieder die Haltekraft aufhebt, und das andere der Stellglieder zeitlich danach die Klappenteile in die Schutzstellung bewegt. Eine weitere Möglichkeit ist, dass die Betätigungseinrichtung ein Stellglied umfasst, mittels welchem die Haltekraft aufhebbar ist. Ist die Haltekraft mittels dieses Stellglieds aufgehoben, so bewirkt diese Aufhebung beispielsweise die Entfesselung einer Energiespeichereinrichtung, beispielsweise eines vorgespannten Federelements, welches die Bewegung der Klappenteile in die Schutzstellung bewirkt. Im Falle des Federelements werden die Klappenteile infolge einer Federkraftbeaufschlagung durch das Federelement in die Schutzstellung bewegt.

Die Betätigungseinrichtung umfasst vorteilhafterweise zumindest eine Anschlagsfläche, welche beispielsweise an einem der Klappenteile angeordnet ist. Ein bzw. das gegebenenfalls vorhandene Stellglied kann über diese Anschlagsfläche auf das entsprechende Klappenteil einwirken, um somit die Bewegung der Klappenteile relativ zueinander und die Bewegung in die Schutzstellung über die Anschlagsfläche bewirken zu können.

In einer weiteren Ausführungsform des Scharniers umfasst die Betätigungseinrichtung zumindest ein relativ zu wenigstens einem der Klappenteile drehbares Betätigungselement, mit welchem eines der Spannteile zumindest in der Normalstellung drehfest verbunden ist. Das bedeutet also, dass das Spannteil über das Betätigungselement relativ zu dem anderen Spannteil drehbar ist zur Aufhebung der Haltekraft. Dies ermöglicht einen einfachen und zeit- und kostengünstigen Austausch der Spannteile nach der Bewegung der Klappenteile und ein Ersetzen dieser Spannteile zur Wiederherstellung der Normalstellung der Klappenteile, ohne anderweitige, kostenintensive Klappenteile ersetzen zu müssen bzw. die gesamte Frontklappe demontieren zu müssen.

Das mit dem Bestätigungselement drehfest verbundene Spannteil ist beispielsweise reversibel lösbar mit diesem verbunden und kann in einfacher Art und Weise in eine korrespondierende Aufnahme ein- und ausgesteckt werden.

Dabei ist vorteilhafterweise vorgesehen, dass die Verzahnungen der Spannteile in der Normalstellung der Klappenteile zwischen dem Betätigungselement und wenigstens einem der Klappenteile angeordnet sind. Dadurch können die beiden Klappenteile besonders eng zueinander angeordnet werden, was die Belastung auf die gelenkige Verbindung der Klappenteile miteinander gering hält. Ingesamt weist dadurch das erfindungsgemäße Scharnier einen besonders geringen Bauraumbedarf auf.

Zur gegenseitigen Fixierung und Verspannung der Klappenteile miteinander ist in einer Ausführungsform eine Schraube vorgesehen, welche gegebenenfalls jeweilige Durchtrittsöffnungen der Spannteile durchdringt. So sind die Klappenteile auf einfache Art und Weise gegeneinander fixierbar und miteinander verspannbar, was den Montageaufwand und die Kosten für das Scharnier in einem geringen Rahmen hält. Außerdem weist infolge der Durchdringung der Durchtrittsöffnungen durch die Schraube das Scharnier bzw. die Halteeinrichtung einen nur sehr geringen Bauraumbedarf auf.

In weiteren vorteilhaften Ausführungsformen der Erfindung weist die in eines der Klappenteile zur Fixierung der Klappenteile in der Normalstellung einzuschraubende Schraube einen ersten, sich an ein Gewinde der Schraube in axialer Richtung der selbigen anschließenden Absatz sowie ein in axialer Richtung der Schraube vom ersten Absatz beabstandeten und insbesondere von einem Schraubenkopf der Schraube gebildeten, zweiten Absatz auf, wobei der Abstand zwischen den beiden Absätzen der Schraube größer ausgebildet ist als eine von dem zumindest in der Normalstellung in axialer Richtung der Schraube zwischen dem einen Klappenteil, in welches die Schraube einzuschrauben ist, und dem zweiten Absatz angeordneten anderen Klappenteil und von dem zumindest in der Normalstellung in axialer Richtung der Schraube zwischen dem einen Klappenteil, in welches die Schraube einzuschrauben ist, und dem zweiten Absatz angeordneten Spannelement bei reduzierter Klemmlänge des Spannelements bereitgestellte Klemmlänge. Dies vermeidet eine Fehlmontage des Spannelements und damit des gesamten Scharniers, da es nicht möglich ist, die beiden Klappenteile mittels der Schraube gegenseitig zu verspannen und somit gegenseitig zu fixieren, wenn schon bei der Montage die Klemmlänge des Spannelements reduziert ist.

Dies ist der Fall, da bei reduzierter Klemmlänge des Spannelements die Schraube mit deren Gewinde so lange in das entsprechende Klappenteil eingeschraubt werden kann, bis der erste Absatz an dem entsprechenden Klappenteil zur Anlage kommt und die Schraube an dem entsprechenden Klappenteil festgeschraubt werden kann, ohne jedoch, dass das weitere Klappenteil und das Spannelement zwischen dem Klappenteil, in welches die Schraube eingeschraubt wird, und dem zweiten Absatz eingeklemmt und somit miteinander verspannt werden können. Die Schraube ist dann zwar festgedreht, jedoch lassen sich die beiden Klappenteile relativ zueinander und das Spannelement gegebenenfalls in axialer Richtung der Schraube translatorisch relativ zur Schraube bewegen, da das Spannelement entweder an dem weiteren Klappenteil, nicht jedoch an dem zweiten Absatz bzw. dem Schraubenkopf oder an dem zweiten bzw. dem Schraubenkopf, nicht jedoch am weiteren Klappenteilen abgestützt und somit nicht zwischen dem weiteren Klappenteil und dem zweiten Absatz eingeklemmt und festgespannt ist.

Eine derartige Fixierung der Klappenteile gegeneinander, indem in das entsprechende Gewinde des einen Klappenteils eingeschraubt und andererseits über den zweiten Absatz an dem Spannelement abgestützt ist, ist nur möglich, wenn die Klemme jedes Spannelements nicht reduziert ist. Dann ist die von dem weiteren Klappenteil und dem Spannelement bereitgestellte Klemmlänge größer als der Abstand zwischen den beiden Absätzen der Schraube. In diesem Fall kann der erste Absatz bei einem Einschrauben der Schraube in das entsprechende Klappenteil nicht in Anlage mit diesem Klappenteil kommen. Bei einem solchen Eindrehen der Schraube kommt es vor einer solchen Anlage zu einem Festziehen der Schraube, wobei der Absatz nicht in Anlage mit dem Klappenteil, in welches die Schraube einzuschrauben ist, kommt und die Schraube einerseits in das Gewinde des entsprechenden Klappenteils eingeschraubt und andererseits über den zweiten Anschlag beispielsweise an dem Spannelement abgestützt ist. Mit anderen Worten reicht die Klemmlänge des weiteren Klappenteils und des Spannelements bei nicht-reduzierter Klemmlänge des Spannelements zur gegenseitigen Fixierung der Klappenteile und zum Verspannen des Spannelements aus. Ist die Schraube dann festgedreht, können die Klappenteile nicht relativ zueinander und auch das Spannelement nicht translatorisch in axialer Richtung der Schraube bewegt werden.

Weist zumindest eines der Klappenteile und/oder das Spannelement zumindest eine Einschubschräge auf, mittels welcher das Spannelement bei einer Bewegung des Klappenteils von der Schutzstellung in die Normalstellung gegebenenfalls aus einer die Normalstellung blockierenden Position in eine die Normalstellung freigebende Position verschiebbar ist, so birgt dies den Vorteil, dass dadurch das entsprechende Klappenteil und damit die Fronthaube bei einem Aufprall eines Fußgängers auf die Fronthaube blockadefrei wieder in die Normalstellung zurückbewegt werden und damit den Fußgänger effizient auffangen kann. Die zumindest eine Einschubschräge erlaubt es somit, das Spannelement ohne Aufwendung einer besonders hohen Betätigungskraft zu verschieben, sodass das Klappenteil und die Fronthaube nach der Bewegung in die Schutzstellung wieder in die Normalstellung zurückbewegt werden kann.

Besonders vorteilhaft ist, wenn sowohl das Klappenteil als auch das Spannelement korrespondierende Einschubschrägen aufweisen, welche bei der Berührung des Klappenteils in die Normalstellung aneinander abgleiten, wodurch das Spannelement entsprechend verschoben wird und die Normalstellung freigibt. Bei einer solchen Einschubschräge kann sich beispielsweise um eine Fase oder dergleichen handeln.

Weitere Vorteile, Merkmale und Einzelheiten der Erfindung ergeben sich aus der nachfolgenden Beschreibung mehrerer bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnungen zeigen in
- Fig. 1: eine schematische Perspektivansicht eines Scharniers für eine Fronthaube eines Kraftwagens mit zwei gelenkig miteinander verbundenen Klappenteilen, welche zwischen einer Normalstellung und einer Schutzstellung relativ zueinander bewegbar und in der Normalstellung mittels einer Halteeinrichtung gehalten sind,
- Fig. 2: eine weitere schematische Perspektivansicht des Scharniers in Fig. 1,
- Fig. 3: eine schematische Perspektivansicht einer alternativen Ausführungsform der beiden Klappenteile gemäß den vorhergehenden Figuren, wobei die Halteeinrichtung ein Spannelement umfasst, über welches die Klappenteile unter Beaufschlagung mit einer Haltekraft zwischen den Klappenteilen gegenseitig fixiert sind, wobei zur Aufhebung der Haltekraft eine Klemmlänge des Spannelements reduzierbar ist,
- Fig. 4: eine schematische Perspektivansicht des Spannelements der Halteeinrichtung gemäß Fig. 3,
- Fig. 5: eine schematische Perspektivansicht eines Betätigungselements, mit welchem ein Spannteil des Spannelements gemäß Fig. 4 drehfest verbunden ist,
- Fig. 6: ausschnittsweise eine schematische Perspektivansicht eines Klappenteils. gemäß Fig. 3, mit welchem ein Spannteil des Spannelements gemäß Fig. 4 drehfest verbunden ist,
- Fig.7: eine schematische Perspektivansicht eines ersten von zwei Spannteilen des Spannelements gemäß den Fig. 4 bis 6,
- Fig. 8: eine schematische Perspektivansicht eines zweiten von zwei Spannteilen des Spannelements gemäß den Fig. 4 bis 6,
- Fig. 9A: eine schematische Vorderansicht einer alternativen Ausführungsform des Spannelements gemäß den Fig. 4 bis 6,
- Fig. 9B: eine schematische Seitenansicht des Spannelements gemäß Fig. 9A,
- Fig. 9C: eine schematische Rückansicht des Spannelements gemäß den Fig. 9A und 9B,
- Fig. 10A: eine schematische Perspektivansicht des Spannelements gemäß den Fig. 9A bis 9C, wobei sich zwei Spannteile des Spannelements in einer ersten Drehposition relativ zueinander befinden,
- Fig. 10B: eine weitere schematische Perspektivansicht des Spannelements gemäß Fig. 10A, wobei sich die Spannteile in einer weiteren Drehposition relativ zueinander befinden,
- Fig. 10C: eine weitere schematische Perspektivansicht des Spannelements gemäß den Fig. 10A und 10B, wobei sich die Spannteile in einer weiteren Drehposition relativ zueinander befinden und
- Fig. 11: ausschnittsweise eine Perspektivansicht von oben des Scharniers gemäß Fig. 3.

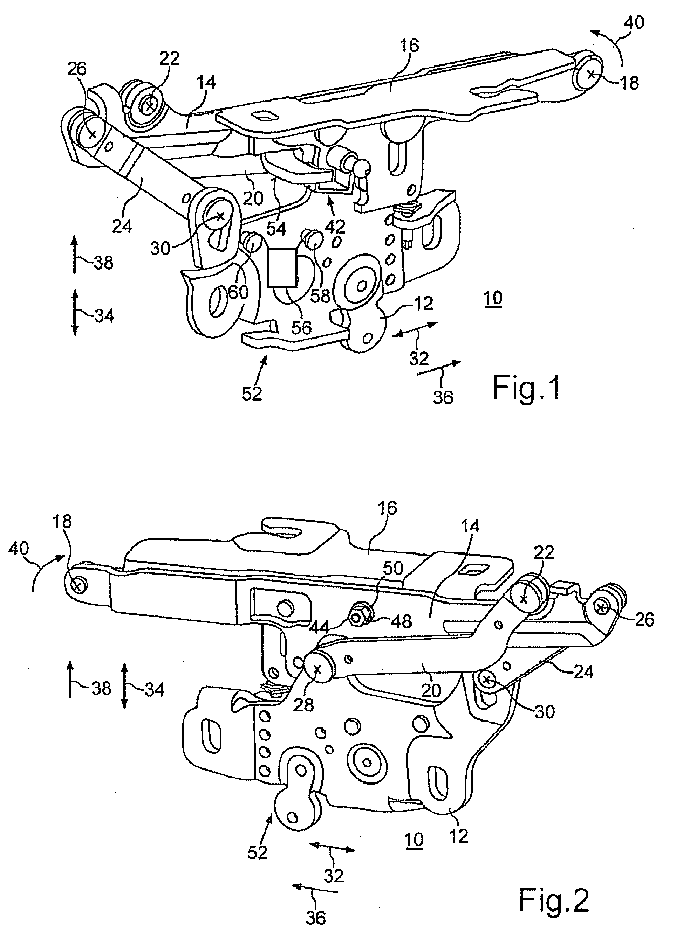

Die Fig. 1 und 2 zeigen eine Ausführungsform eines Scharniers 10 für eine Fronthaube eines Personenkraftwagens, wobei das Scharnier 10 ein Klappenteil 12 umfasst, welches an der Karosserie des Personenkraftwagens zu befestigen ist. Über das Klappenteil 12 ist damit das gesamte Scharnier 10 fest mit der Karosserie zu verbinden. Die Fronthaube ist dabei vorteilhafterweise mit zwei Scharnieren gemäß dem Scharnier 10 an der Karosserie öffen- und schließbar zu befestigen, wobei das Scharnier 10 gemäß Fig. 1 auf einer in Fahrzeugquerrichtung bezogen auf die Vorwärtsfahrtrichtung des Personenkraftwagens linken Seite anzuordnen ist. Ein entsprechendes, auf einer in Fahrzeugquerrichtung bezogen auf die Vorwärtsfahrtrichtung rechten Seite anzuordnendes Scharnier ist dabei bezüglich der Mittelebene des Personenkraftwagens spiegelsymmetrisch zu dem Scharnier 10 gemäß Fig. 1 ausgebildet.

Das Scharnier 10 umfasst weiterhin ein weiteres Klappenteil 14 sowie ein Klappenteil 16, wobei das Klappenteil 16 mit der Fronthaube zu verbinden ist. Das Klappenteil 14 und das Klappenteil 16 sind gelenkig miteinander verbunden und um eine Schwenkachse 18 relativ zueinander zwischen in den Fig. 1 und 2 gezeigten Normalstellung und einer Schutzstellung verschwenkbar. Das Klappenteil 14 ist mit einem Lenkerelement 20 gelenkig verbunden, wobei das Klappenteil 14 und das Lenkerelement 20 um eine Schwenkachse 22 relativ zueinander verschwenkbar sind. Des Weiteren ist das Klappenteil 14 mit einem weiteren Lenkerelement 24 verbunden, wobei das Klappenteil 14 und das Lenkerelement 24 um eine Schwenkachse 26 relativ zueinander verschwenkbar sind. Das Lenkerelement 20 ist mit dem Klappenteil 12 gelenkig verbunden, wobei das Lenkerelement 20 und das Klappenteil 12 um eine Schwenkachse 28 relativ zueinander verschwenkbar sind. Analoges trifft auf das Lenkerelement 24 zu, das ebenso mit dem Klappenteil 12 gelenkig verbunden ist, wobei das Lenkerelement 24 und das Klappenteil 12 um eine weitere Schwenkachse 30 relativ zueinander verschenkbar sind. Da die Schwenkachsen 22 und 26 bzw. die Schwenkachsen 28 und 30 in Längserstreckungsrichtung des Scharniers 10 gemäß einem Richtungspfeil 32, welche mit der Fahrzeugslängsrichtung übereinstimmt, voneinander beabstandet sind, ist das Scharnier 10 in der Normalstellung des Klappenteils 14 und des Klappenteils 16 als viergelenkiges Scharnier ausgebildet. Dadurch ist die Fronthaube zwischen einer Schließstellung, in welcher sie einen in Fahrzeughochrichtung gemäß einem Richtungspfeil 34 unterhalb der Fronthaube angeordneten Motorraum des Personenkraftwagens zumindest bereichsweise abdeckt, und in welcher das Scharnier 10 die in den Fig. 1 und 2 gezeigte Stellung einnimmt, und zumindest einer, den Motorraum zumindest bereichsweise freigebenden Offenstellung relativ zu der Karosserie des Personenkraftwagens verschwenkbar, indem sie zunächst beim Bewegen von der Schließstellung in die Offenstellung in Fahrzeughochrichtung gemäß dem Richtungspfeil 34 leicht nach oben gemäß einem Richtungspfeil 38 sowie in Fahrzeuglängsrichtung gemäß dem Richtungspfeil 32 leicht nach vorne gemäß einem Richtungspfeil 36 bewegt wird, bevor sie schließlich gemäß einem Richtungspfeil 40 auf schwenkt.

In der Normalstellung sind das Klappenteil 14 und das Klappenteil 16 mittels einer Halteeinrichtung 42 gehalten, wobei die Halteeinrichtung 42 des Scharniers 10 gemäß den Fig. 1 und 2 ein Schraubelement 44 umfasst, welches das Klappenteil 14 sowie das Klappenteil 16 durch entsprechende Durchtrittsöffnungen durchdringt und über einen Schraubenkopf 46 des Schraubelements 44 an dem Klappenteil 16 einerseits abgestützt ist. Andererseits weist das Schraubelement 44 ein Außengewinde auf, auf welches eine Mutter 48 der Halteeinrichtung 42 aufgeschraubt ist.

Die Mutter 48 ist dabei unter Vermittlung einer Unterlegscheibe 50 an dem Klappenteil 14 abgestützt und mit einem bestimmten Drehmoment angezogen, so dass das Klappenteil 14 und das Klappenteil 16 über das Schraubelement 44 und die Mutter 48 als Spannelement unter Beaufschlagung mit einer Haltekraft zwischen dem Klappenteil 14 und dem Klappenteil 16 in der Normalstellung gegeneinander fixiert und auf diese Art und Weise miteinander verspannt sind.

Zum Bewegen des Klappenteils 14 und des Klappenteils 16 in die Schutzstellung ist eine Betätigungseinrichtung 52 des Scharniers 10 vorgesehen, welche eine Anschlagsfläche 54 umfasst, die an dem Klappenteil 14 angeordnet ist. Ferner umfasst die Betätigungseinrichtung 52 einen pyrotechnischen Aktor 56, der über zwei Bolzen 58 und 60 am Klappenteil 12 gehalten ist. Der Aktor 56 weist einen in einem Gehäuse des Aktors 56 aufgenommenen Stößel auf, welcher durch Betätigen des Aktors 56 translatorisch in Hochrichtung des Scharniers 10 gemäß dem Richtungspfeil 34 nach oben in Richtung der Anschlagsfläche 54 gemäß dem Richtungspfeil 36 bewegbar ist. Trifft der Stößel mit einer zu ihm korrespondierenden Anschlagsfläche auf die Anschlagsfläche 54 auf, so wird dadurch das Schraubelement 44 abgeschert, was eine Aufhebung der Haltekraft zwischen dem Klappenteil 14 und dem Klappenteil 16 bewirkt. Außerdem werden dadurch das Klappenteil 14 und das Klappenteil 16 relativ zueinander um die Schwenkachse 18 verschwenkt und die Schutzstellung bewegt, wodurch die Fronthaube insbesondere in einem einer Windschutzscheibe des Personenkraftwagens zugewandten Kantenbereich in Fahrzeughochrichtung nach oben hin gemäß dem Richtungspfeil 38 angehoben wird.

Durch die Aufhebung der Haltekraft und damit der Fixierung des Klappenteils 14 und des Klappenteils 16 gegeneinander wird aus dem zunächst viergelenkigen Scharnier 10 ein fünfgelenkiges Scharnier mit den Schwenkachsen 18, 22, 26, 28 und 30. Eine definierte Kinematik und damit eine definierte Bewegung der Fronthaube in die Schutzstellung ist dadurch realisiert, dass die Fronthaube in Vorwärtsfahrtrichtung vorderseitig in einem Haubenschloss um eine weitere Schwenkachse schwenkbar gehalten ist, um welche sich die Fronthaube beim Bewegen in die Schutzstellung nach oben hin dreht. Dabei ermöglicht das Haubenschloss auch eine zumindest geringe translatorische Bewegung der Fronthaube in Fahrzeuglängsrichtung gemäß dem Richtungspfeil 32.

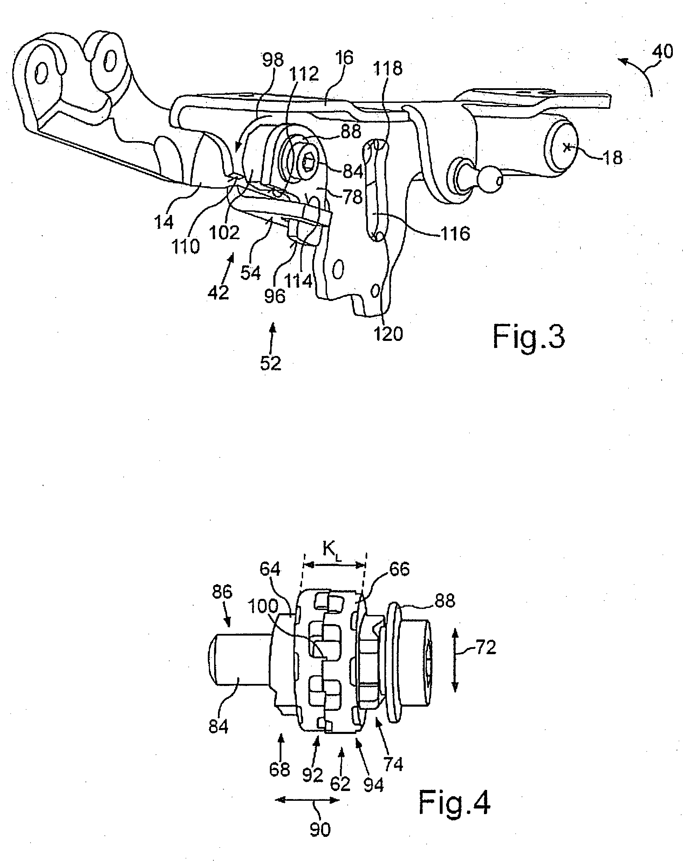

Die Fig. 3 zeigt eine alternative Ausführungsform des Klappenteils 14 und des Klappenteils 16 sowie der Betätigungseinrichtung 52 sowie der Halteeinrichtung 42, welche zum Fixieren des Klappenteils 14 und des Klappenteils 16 gegeneinander ein Spannelement 62 umfasst, mittels welchem das Klappenteil 14 und das Klappenteil 16 miteinander verspannt sind, und welches im Folgenden in Zusammenschau mit den Fig. 4 bis 10C erläutert ist.

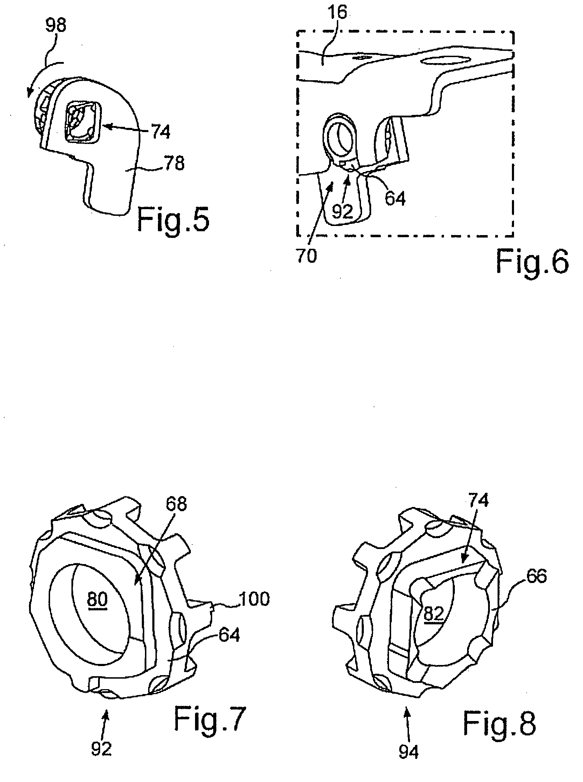

Das Spannelement 62 umfasst ein erstes Spannteil 64 sowie ein zweites Spannteil 66, wobei das Spannteil 64 reversibel lösbar und drehfest mit dem Klappenteil 16 verbunden ist. Dazu weist das Spannteil 64 eine Verdrehsicherung 68 in Form einer von einer kreisrunden Kontur abweichende, unrunde Kontur auf, welche in der Normalstellung in einer Aufnahmeöffnung 70 des Klappenteils 16 aufgenommen ist, was insbesondere der Fig. 6 zu entnehmen ist. Die Aufnahmeöffnung 70 korrespondiert dabei mit einer Innenkontur zu der Verdrehsicherung 68. Des Weiteren ist die Aufnahmeöffnung 70 auch in radialer Richtung der Aufnahmeöffnung 70 sowie des Spannelements 62 gemäß einem Richtungspfeil 72 zu einer Seite hin geöffnet, so dass das Spannteil 64 bei der Bewegung des Klappenteils 16 und des Klappenteils 14 in die Schutzstellung aus der Aufnahmeöffnung 70 hinaustreten kann, während das Spannteil 64 in seiner Position, welche aus in der Normalstellung einnimmt, verbleibt.

Auch das Spannteil 66 weist eine Verdrehsicherung 74 in Form einer von einer kreisrunden Kontur abweichenden, unrunden Kontur auf, welche in einer Aufnahmeöffnung 76 eines Mitnehmers 78 der Betätigungseinrichtung 52 aufgenommen ist. Dabei korrespondiert eine Innenkontur der Aufnahmeöffnung 76 zu der als Kontur ausgebildeten Verdrehsicherung 74, wobei das Spannteil 66 reversibel lösbar mit dem Mitnehmer 78 drehfest verbunden ist. Der Mitnehmer 78 weist einen Anschlag 112 auf, der zu einem Anschlag 114 des Klappenteils 16 korrespondiert.

Die Spannteile 64 und 66 weisen jeweilige Durchtrittsöffnung 80 bzw. 82 auf, welche von einer Schraube 84 durchdrungen sind. Einerseits ist die Schraube 84 über einen Schraubenkopf 88 an dem Mitnehmer 78 abgestützt, wobei der Mitnehmer 78 wiederum an dem Spannteil 66 abgestützt ist. Andererseits weist die Schraube 84 ein Gewinde 86 auf, welches in ein korrespondierendes und fest mit dem Klappenteil 14 verbundenes Gegengewinde eingeschraubt ist.

Wie insbesondere der Fig. 3 zu entnehmen ist, sind in axialer Richtung der Schraube 84 gemäß einem Richtungspfeil 90 zwischen dem Gegengewinde des Klappenteils 14 und dem Schraubenkopf 88 das Klappenteil 16, das Spannteil 64, das Spannteil 66 sowie der Mitnehmer 78 angeordnet und jeweils gegeneinander paarweise abgestützt, so dass durch Festziehen bzw. Anziehen der Schraube 84 mit einem bestimmten Drehmoment das Klappenteil 14 mit dem Klappenteil 16 unter Beaufschlagung einer entsprechenden Haltekraft gegenseitig fixierbar und über eine solche Abstützkette miteinander verspannbar sind.

Mit anderen Worten stellen das Klappenteil 16, der Mitnehmer 78 und das Spannelement 62 mit den Spannteilen 64 und 66 eine Gesamtklemmlänge K_{L}gₑₛ bereit, über welche das Klappenteil 14 und das Klappenteil 16 gegenseitig fixiert sind. Eine Teilklemmlänge dieser Gesamtklemmlänge K_{L}gₑₛ wird durch eine Klemmlänge K_{L} des Spannelements 62 bereitgestellt. Dazu weist das Spannteil 64 eine Verzahnung 92 und das Spannteil 66 eine Verzahnung 94 mit jeweiligen Zähnen auf. In der Normalstellung befinden sich die Verzahnungen 92 und 94 gemäß den Fig. 4, 9B und 10A nicht im Eingriff miteinander, sondern stützen sich in axialer Richtung gemäß dem Richtungspfeil 90 stirnseitig aneinander ab. Dadurch ist die durch das Spannelement 62 bereitgestellte Klemmlänge K_{L} maximal, und das Klappenteil 14 und das Klappenteil 16 sind durch die Haltekraft über die Gesamtklemmlänge K_{Lges} gegenseitig fixiert und fest miteinander verspannt.

Wird nun mittels einer Erfassungseinrichtung eine unfallbedingte Kraftbeaufschlagung der Fronthaube, beispielsweise im Falle einer Kollision des Personenkraftwagens mit einem Fußgänger, erfasst oder eine solche, unvermeidbare unfallbedingte Kraftbeaufschlagung vorhererfasst, so werden das Klappenteil 14 und das Klappenteil 16 zum Schutze des Fußgängers von der Normalstellung in die Schutzstellung bewegt. Dazu wird beispielsweise ein Stellglied wie der pyrotechnische Aktor 56 aktiviert, wodurch dessen Stößel in Fahrzeughochrichtung nach oben hin gemäß dem Richtungspfeil 38 bewegt wird. Zeitlich bevor der Stößel auf die Anschlagsfläche 54 der Betätigungseinrichtung 52 auftrifft, trifft er zunächst auf eine Anschlagsfläche 96 des Mitnehmers 78 der Betätigungseinrichtung 52 auf, wobei eine solche Krafteinwirkung des Stößels auf den Mitnehmer 78 von einer Drehachse der Schraube 88 in radialer Richtung der selbigen beabstandet ist. Mit anderen Worten bewirkt die Tatsache, dass der Stößel auf die Anschlagsfläche 96 auftrifft, eine Drehung des Mitnehmers 78 in eine Drehrichtung gemäß dem Richtungspfeil 98, wobei diese Drehrichtung bei einer Draufsicht auf die Schraube 88 bzw. den Mitnehmer 78 ausgehend von der Mittelebene des Personenkraftwagens zu einer in diesem Falle linksseitigen Außenseite desselbigen hin dem Gegenuhrzeigersinn entspricht.

Eine unerwünschte, zu weite Drehung des Mitnehmers 78 in die Drehrichtung gemäß dem Pfeil 98 ist dabei durch die Anschläge 112 und 114 vermieden. Nach einer gewissen Drehung kommt nämlich der Anschlag 112 mit dem Anschlag 114 in Kontakt und vermeidet ein weiteres Verdrehen des Mitnehmers 78, sodass die Anschlagfläche 96 bei einer Betätigung des Mitnehmers 78 nicht mit einer Unterseite des Klappenteils 16 in Kontakt kommen und somit das Klappenteil 16 daran hindern kann, von der Schutzstellung in die Normalstellung zurückzukehren.

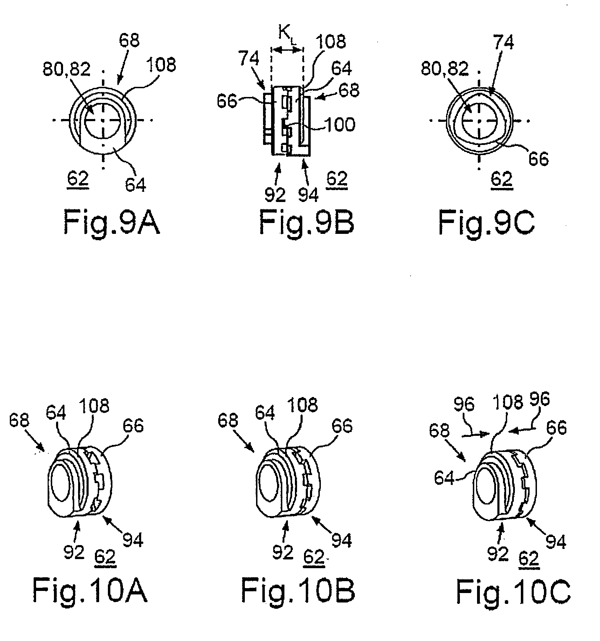

Da das Spannteil 66 auf die geschilderte Art und Weise drehfest mit dem Mitnehmer 78 verbunden ist, dreht sich auch das Spannteil 66 in diese Drehrichtung gemäß dem Richtungspfeil 98, während das Spannteil 64 auf die geschilderte Art und Weise drehfest mit dem Klappenteil 14 verbunden ist und sich somit relativ zu dem Spannteil 66 nicht drehen kann. Daraus resultiert eine Relativdrehung zwischen dem Spannteil 66 und dem Spannteil 64 sowie zwischen den Verzahnungen 94 und 92. Dabei gleiten die in der Normalstellung stirnseitig aneinander abgestützten Verzahnungen 92 und 94 aneinander ab, bis sich die Zähne der Verzahnungen 92 und 94 nicht mehr stirnseitig gegenüber stehen und aneinander abstützen sondern vielmehr die Zähne der Verzahnungen 92 Zahnlücken der Verzahnung 94 und die Zähne der Verzahnung 94 Zahnlücken der Verzahnung 92 gegenüber liegen. Dies ist Fig. 10B zu entnehmen.

Aufgrund der in axialer Richtung des Spannelements 62 wirkenden Haltekraft bewegen sich dann die Spannteile 64 und 66 gemäß Richtungspfeilen 96 aufeinander zu, was zu einer Reduzierung der in der Normalstellung von dem Spannelement 62 bereitgestellten Klemmlänge K_{L} und damit zu einer Reduzierung der Gesamtklemmlänge K_{Lges} führt.

Dieses Drehen des Spannteils 66 relativ zu dem Spannteil 64 bewirkt ein gewünscht herbei geführtes Setzverhalten, was zur Aufhebung der Verspannung des Klappenteils 14 mit dem Klappenteil 16 und damit zur Aufhebung der gegenseitigen Fixierung führt. Infolge dessen können das Klappenteil 14 und das Klappenteil 16 mit einer nur gering aufzuwendenden Betätigungskraft relativ zueinander in die Schutzstellung bewegt werden, da zeitlich vorher die Haltekraft bereits aufgehoben wurde. Dies bedeutet also, dass im Zeitpunkt der gewünschten Relativbewegung des Klappenteils 14 zu dem Klappenteil 16 die mittels der Schraube 84 bewirkte Verspannung aufgehoben ist.

Im weiteren Verlauf trifft dann der Stößel auf die Anschlagsfläche 54 der Betätigungseinrichtung 52 auf, was infolge der zuvor geschilderten Kinematik des Scharniers 10 bei in dem Haubenschloss abgestützter Fronthaube zur Bewegung des Klappenteils 14 und des Klappenteils 16 und damit der Fronthaube in die Schutzstellung führt.

Die notwendige, aufzuwendende Betätigungskraft zum Reduzieren der Klemmlänge K_{L} und damit zum Aufheben der Fixierung ist dabei verglichen mit der mittels der Schraube 84 bewirkten Haltekraft zwischen dem Klappenteil 14 und dem Klappenteil 16 als gering zu beziffern, wodurch das Klappenteil 14 und das Klappenteil 16 zwar besonders fest miteinander in der Normalstellung fixiert werden können, jedoch eine im Vergleich dazu geringe Betätigungskraft nötig ist, um diese Fixierung aufzuheben. In der Folge ist weiterhin eine nur geringe, aufzuwendende Betätigungskraft zum Bewegen des Klappenteils 14 und des Klappenteils 16 in die Schutzstellung aufzuwenden. Dies bedeutet, dass der pyrotechnische Aktor 56 sowohl bezüglich dessen Dimensionen bzw. Ausmaße, dessen Gewicht sowie auch seiner Leistungsfähigkeit gering ausgelegt werden kann. Dies hält das Gewicht des Scharniers 10 sowie die Kosten in einem geringen Rahmen.

Das Klappenteil 16 weist eine Führungskulisse in Form eines Langlochs 116 auf, in welcher ein mit dem Scharnierteil 14 fest verbundener und in der Figur nicht dargestellter Bolzen geführt ist. In der in der Fig. 3 gezeigten Normalstellung des Scharnierteils 14 und des Klappenteils 16 liegt der Bolzen dabei an einem durch das Langloch 116 gebildeten Anschlag 118 an, sodass das Scharnier bzw. 10 das Scharnierteil 14 und das Klappenteil 16 auf einfachere Art und Weise in die gewünschte und definierte Normalstellung zu bewegen sind. Mit anderen Worten ist die Normalstellung des Scharniers 10 dann erreicht, wenn der Bolzen wieder an dem Anschlag 118 anliegt. Diese genaue Ausrichtung der Normalstellung muss damit nicht über das Spannelement 62 erfolgen. Aufwändige Ausrichtmaßnahmen zur Wiedereinstellung der Normalstellung, um damit beispielsweise ein Spaltmaß der Fronthaube einzustellen, sind nicht vonnöten.

Des Weiteren ist durch das Langloch 116 ein weiterer Anschlag 120 gebildet, an welchem der Bolzen in der Schutzstellung anliegt. Eine zu weite Relativbewegung des Klappenteils 16 zu dem Scharnierteil 14 ist dadurch vermieden. Mit anderen Worten können sich das Klappenteil 16 und das Scharnierteil 14 nur soweit in die Schutzstellung bewegen, bis der mit dem Scharnierteil 14 fest verbundene Bolzen in Anlage mit dem Anschlag 120 kommt.

Die Anschläge 118 und 120 ermöglichen somit eine immer gleiche Positionierung des Scharnierteils 14 relativ zu dem Klappenteil 16, und das sowohl in der Normalstellung als auch in der Schutzstellung. Bei einem Wechsel des Spannelements 62 muss die Fronthaube sowie das Klappenteil 16 und das Scharnierteil 14 nicht neu eingestellt werden zur Darstellung eines bestimmten Spaltmaßes und zur Darstellung der gewünschten Funktionalität des Scharniers 10.

Wie insbesondere den Fig. 4, 9B und 10A bis 10C zu entnehmen ist, weist die Verzahnung 92 des Spannteils 64 zumindest einen Anschlag 100 auf, mittels welchem ein unerwünschtes Verdrehen der Spannteile 64 und 66 relativ zueinander entgegen der Drehrichtung gemäß dem Richtungspfeil 98 zum Aufheben der gegenseitigen Fixierung des Klappenteils 14 und des Klappenteils 16 verhinderbar ist. Der Anschlag 100 verhindert somit, dass das Spannteil 66 relativ zu dem Spannteil 64 entgegen einer Drehrichtung gemäß dem Richtungspfeil 98 gedreht werden kann. Dies ist insbesondere vorteilhaft bei einer Montage des Scharniers 10, bei welcher das Klappenteil 14 und das Klappenteil 16 mittels der Schraube 84 gegeneinander fixiert werden, indem sie miteinander verspannt werden. Handelt es sich bei dem Gewinde 86 der Schraube 84 um rein Rechtsgewinde, so sind das Klappenteil 14 und das Klappenteil 16 derart miteinander verspannbar, dass die Schraube in die Drehrichtung entgegen dem Richtungspfeil 98, also bei entsprechender, zuvor geschilderter Draufsicht auf die Schraube 84 im Uhrzeigersinn festgezogen wird. Ist der Anschlag 100 nicht vorgesehen, so könnte es passieren - falls keiner anderweitigen Vorkehrungen getroffen sind -, dass das Spannteil 66 infolge eines Reibschlusses zwischen dem Schraubenkopf 88 und dem Mitnehmer 78 von der Schraube 44 beim Anziehen dieser mitgenommen und relativ zu dem Spannteil 64 verdreht wird, so dass es bereits bei der Montage zu einer unerwünschten Reduzierung der Klemmlänge K_{L} kommt oder, dass sich die Verzahnungen 92 und 94 nur über sehr geringe Kontaktflächen aneinander abstützen, so dass es bei Erschütterungen des Scharniers zu einer selbständigen Reduzierung der Klemmlänge K_{L} kommen könnte. Dies ist durch den Anschlag 100 vermieden.

An dieser Stelle sei angemerkt, dass das entsprechende Gewinde der Schraube der Halteeinrichtung des rechtsseitigen Scharniers der Fronthaube gegenläufig zu dem Gewinde 86 der Schraube 84 des linksseitigen Scharniers 10 der Fronthaube ausgebildet ist. Handelt es sich somit bei dem Gewinde 86 um ein Rechtsgewinde, so handelt es sich vorteilhafterweise bei dem entsprechenden Gewinde der Schraube des rechtsseitigen Scharniers um ein Linksgewinde und umgekehrt. Dies ist vorteilhaft der Fall, da, wie bereits angedeutet, das zu dem Scharnier 10, welches auf einer bezogen auf die Vorwärtsfahrtrichtung linken Seite des Personenkraftwagens anzuordnen ist, Geschilderte, analog, allerdings spiegelsymmetrisch auf das Scharnier zutrifft, welches bezogen auf die Vorwärtsfahrtrichtung des Personenkraftwagens auf der rechten Seite anzuordnen ist. Dadurch ist auch bei dem Scharnier auf der rechten Seite des Personenkraftwagens die geschilderte Sicherung gegenüber einer unerwünschten Relativdrehung der entsprechenden Spannteile des Spannelements bei der Montage des Scharniers realisiert.

Wie der Fig. 3 zu entnehmen ist, umfasst die Halteeinrichtung 42 eine Manschette 102, welche die Verzahnungen 92 und 94 in Umfangsrichtung der selbigen umgibt, um die Verzahnungen 92 und 94 vor einer Verschmutzung und damit vor einer negativen Beeinflussung ihrer Funktionsfähigkeit zu schützen.

Die Fig. 9A bis 10C zeigen eine alternative Ausführungsform des Spannelements 62 mit den Spannteilen 64 und 66, wobei die Funktion des Spannelements 62 die gleiche ist wie die des Spannelements 62 gemäß den vorhergehenden Figuren. Die Spannelemente 62 unterscheiden sich lediglich hinsichtlich der Ausgestaltung ihrer Verdrehsicherungen 68 und 74.

Wie insbesondere der Fig. 6 zu entnehmen ist, weist die Aufnahmeöffnung 70 des Klappenteils 16 eine spezielle Austrittskontur auf, über welche das Spannteil 64 aus der Aufnahmeöffnung 70 austreten kann. Dies ist der Fall, damit sich das Klappenteil 16 und das Spannteil 64 nicht verklemmen, wenn sich das Klappenteil 16 zum Bewegen in die Schutzstellung von dem Spannteil 64 löst. Dies kommt der Funktionserfüllung des Scharniers 10 zugute.

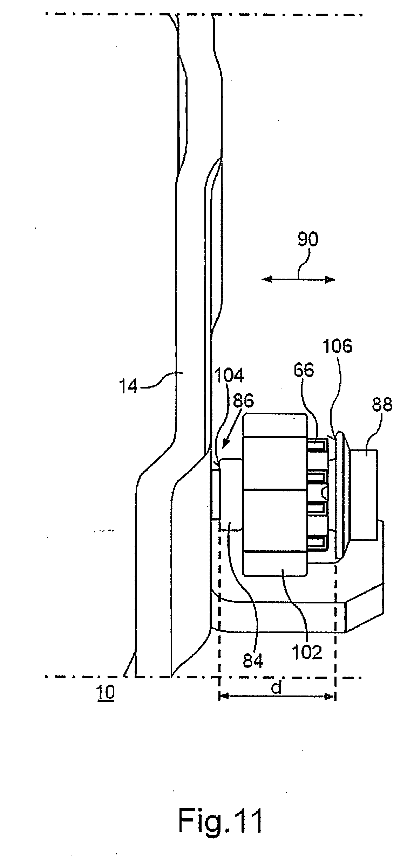

Die Fig. 11 zeigt das Klappenteil 16 des Scharniers 10, in welches die Schraube 84 eingeschraubt ist. Wie der Fig. 11 zu entnehmen ist, weist die Schraube 84 einen sich in axialer Richtung der Schraube 84 gemäß dem Richtungspfeil 90 an das Gewinde 86 anschließenden ersten Absatz 104 sowie einen zweiten, durch den Schraubenkopf 88 gebildeten Anschlag 106, welcher von dem ersten Anschlag 104 in axialer Richtung der Schraube 84 um einen Abstand d beabstandet ist.

Wie ersichtlich ist, ist der Abstand d bei nicht-reduzierter Klemmlänge K_{L} des Spannelements 62 kleiner als die von dem Klappenteil 16, dem Mitnehmer 68 und dem Spannelement 62 mit den Spannteilen 64 und 66 bereitgestellte Gesamtklemmlänge K_{Lges}.

Daraus folgt, dass beim Einschrauben der Schraube 84 in das Klappenteil 16 und beim Festziehen der Schraube 84 zum Verspannen und gegenseitigen Verspannen des Scharnierteils 14 und des Klappenteils 16 der Anschlag 104 nicht in Anlage mit dem Klappenteil 16 kommt, sondern von diesem beabstandet ist. Das Festziehen der Schraube 84 ist somit möglich, da sich die Schraube 84 nicht über den Anschlag 104 sondern über das Spannelement 66, den Mitnehmer 78 und den Anschlag 106 am Klappenteil 16 und nicht etwa über den Anschlag 104 am Klappenteil 16 abstützt.

Ist bei einer solchen Montage des Scharniers 10 die Klemmlänge K_{L} des Spannelements 62 reduziert, so ist der Abstand d größer als die dann von dem Klappenteil 14, dem Spannelement 62 und den mit 78 bereitgestellte Klemmlänge.

Die Schraube 84 kann bei einem Einschrauben in das Klappenteil 16 zwar festgezogen werden. Jedoch kann die Schraube 84 nur deswegen festgezogen werden, da der Anschlag 104 in Anlage mit dem Klappenteil 16 kommt, und sich die Schraube nicht etwa über das Scharnierteil 14, das Spannelement 62, den Mitnehmer 68 und den Anschlag 106 am Klappenteil 16 abstützt. Das Klappenteil 16 und das Scharnierteil 14 sind dann trotz festgezogener Schraube 84 relativ zueinander bewegbar. Zudem ist trotz festgezogener Schraube 84 das Spannelement 62 relativ zur Schraube 84 in axialer Richtung der selbigen gemäß dem Richtungspfeil 90 verschiebbar. All dies sind Hinweise darauf, dass eine Fehlmontage stattgefunden hat, die es zu korrigieren gilt. Mit anderen Worten ermöglicht diese Ausgestaltung des Abstands d zwischen den Anschlägen 104 und 106 die Erkennung und Vermeidung bzw. die Korrektur einer Fehlmontage.

Eine einfache und blockadefreie Bewegung des Scharniers 10 bzw. des Klappenteils 16 von der Schutzstellung zurück in die in der Fig. 3 gezeigten Normalstellung ist dadurch realisiert, dass das Klappenteil 16 sowie das Spannelement 62 zueinander korrespondierende Einschubschrägen 108 und 110 aufweisen, die bei der Bewegung des Klappenteils 16 in die Normalstellung zusammenwirken und aneinander abgleiten, sodass das Spannelement 62 in axialer Richtung gemäß dem Richtungspfeil 90 relativ zur Schraube 84 in Richtung des Schraubenkopfs 88 geschoben wird, falls das Spannelement 62 im Zuge der Betätigung des Scharniers 10 in die Schutzstellung in axialer Richtung der Schraube 84 relativ zu dieser von dem Schraubenkopf 88 weg gerutscht ist, sodass das Spannelement 62 das Einnehmen der Normalstellung durch das Klappenteil 16 verhindern würde. Mit anderen Worten kann das beispielsweise durch einen Aufprall eines Fußgängers auf die Fronthaube in die Normalstellung zurück bewegte Scharnierteil 16 das Spannelement 62 über die Anschläge 108 und 110 besonders einfach zurück in Richtung des Schraubenkopfs 88 drücken, somit die Normalstellung einnehmen und den Fußgänger effizient abfangen.

### Bezugszeichenliste

- 10: Scharnier
- 12: Scharnierteil
- 14: Scharnierteil
- 16: Klappenteil
- 18: Schwenkachse
- 20: Lenkerelement
- 22: Schwenkachse
- 24: Lenkerelement
- 26: Schwenkachse
- 28: Schwenkachse
- 30: Schwenkachse
- 32: Richtungspfeil
- 34: Richtungspfeil
- 36: Richtungspfeil
- 38: Richtungspfeil
- 40: Richtungspfeil
- 42: Halteeinrichtung
- 44: Schraubelement
- 46: Schraubenkopf
- 48: Mutter
- 50: Unterlegscheibe
- 52: Betätigungseinrichtung
- 54: Anschlagsfläche
- 56: Aktor
- 58: Bolzen
- 60: Bolzen
- 62: Spannelement
- 64: Spannteil
- 66: Spannteil
- 68: Verdrehsicherung
- 70: Aufnahmeöffnung
- 72: Richtungspfeil
- 74: Verdrehsicherung
- 76: Aufnahmeöffnung
- 78: Mitnehmer
- 80: Durchtrittsöffnung
- 82: Durchtrittsöffnung
- 84: Schraube
- 86: Gewinde
- 88: Schraubenkopf
- 90: Richtungspfeil
- 92: Verzahnung
- 94: Verzahnung
- 96: Anschlagsfläche
- 98: Richtungspfeil
- 100: Anschlag
- 102: Manschette
- 104: Absatz
- 106: Absatz
- 108: Einschubschräge
- 110: Einschubschräge
- 112: Anschlag
- 114: Anschlag
- 116: Langloch
- 118: Anschlag

## Patentansprüche

1. Scharnier (10) für eine Fronthaube eines Kraftwagens, mit einem ersten Klappenteil (14) und mit zumindest einem zweiten Klappenteil (16), welche gelenkig miteinander verbunden und zwischen einer Normalstellung und einer Schutzstellung relativ zueinander bewegbar sind, mit einer Halteeinrichtung (42), mittels welcher die Klappenteile (14, 16) in der Normalstellung gehalten sind, und mit zumindest einer Betätigungseinrichtung (52), mittels welcher eine Bewegung der Klappenteile (14, 16) von der Normalstellung in die Schutzstellung bewirkbar ist, **dadurch gekennzeichnet, dass** die beiden Klappenteile (14, 16) in der Normalstellung über ein Spannelement (62) der Halteeinrichtung (42) unter Beaufschlagung mit einer Haltekraft zwischen den Klappenteilen (14, 16) gegenseitig fixiert sind und miteinander verspannt sind, wobei zur Aufhebung der Haltekraft der Halteeinrichtung (42) zwischen den Klappenteilen (14, 16) eine Klemmlänge (K_{L}) des Spannelements (62) reduzierbar ist.

2. Scharnier (10) nach Anspruch 1, **dadurch gekennzeichnet, dass** die Haltekraft der Halteeinrichtung (42) zwischen den Klappenteilen (14, 16) aufhebbar ist, bevor eine Bewegung der Klappenteile (14, 16) relativ zueinander erfolgt.

3. Scharnier (10) nach einem der Ansprüche 1 oder 2, **dadurch gekennzeichnet, dass** die Haltekraft durch Drehen des Spannelements (62) relativ zu wenigstens einem der Klappenteile (14, 16) aufhebbar ist.

4. Scharnier (10) nach einem der Ansprüche 1 bis 3, **dadurch gekennzeichnet, dass** das Spannelement (62) zwei zueinander korrespondierende Spannteile (64, 66) umfasst, wobei die Klemmlänge (K_{L}) des Spannelements (62) durch eine Relativbewegung der Spannteile (64, 66) zueinander reduzierbar ist.

5. Scharnier (10) nach Anspruch 4, **dadurch gekennzeichnet, dass** die Klemmlänge (K_{L}) durch eine Relativdrehung der Spannteile (64, 66) zueinander reduzierbar ist.

6. Scharnier (10) nach einem der Ansprüche 4 oder 5, **dadurch gekennzeichnet, dass** die Spannteile (64, 66) jeweils zumindest eine Verzahnung (92, 94) aufweisen, welche in einer ersten Relativposition der Spannteile (64, 66) zueinander stirnseitig aneinander anliegen, welche sich nicht in Eingriff miteinander befinden und welche zum Reduzieren der Klemmlänge (K_{L}) durch Drehen der Spannteile (64. 66) relativ zueinander in eine weitere Relativposition in Eingriff miteinander bewegbar sind.

7. Scharnier (10) nach einem der Ansprüche 4 bis 6, **dadurch gekennzeichnet, dass** zumindest eines der Spannteile (64, 66) wenigstens einen Anschlag (100) aufweist, mittels welchem eine Relativbewegung der Spannteile (64, 66) zueinander in wenigstens eine Raumrichtung verhinderbar ist.

8. Scharnier (10) nach einem der Ansprüche 4 bis 7, **dadurch gekennzeichnet**, das zumindest eines der Spannteile (64, 66) wenigstens eine Verdrehsicherung aufweist (68, 74), mittels welcher eine Relativdrehung des Spannteils (64, 66) zu wenigstens einem der Klappenteile (14, 16) verhinderbar ist.

9. Scharnier (10) nach einem der Ansprüche 4 bis 8, **dadurch gekennzeichnet, dass** die Haltekraft durch Drehen zumindest eines der Spannteile (64, 66) des Spannelements (62) relativ zu wenigstens einem der Klappenteile (14, 16) aufhebbar ist.

10. Scharnier (10) nach einem Ansprüche 4 bis 9, **dadurch gekennzeichnet, dass** die Betätigungseinrichtung (52) zumindest ein relativ zu wenigstens einem der Klappenteile (14, 16) drehbares Betätigungselement (78) umfasst, mit welchem eines der Spannteile (64, 66) zumindest in der Normalstellung drehfest verbunden ist.

11. Scharnier (10) nach einem Ansprüche 1 bis 10, **dadurch gekennzeichnet, dass** die Klappenteile (14, 16), mittels zumindest einer Schraube (44, 84), miteinander verspannt sind.

12. Scharnier (10) nach Anspruch 11, **dadurch gekennzeichnet, dass** eine Drehrichtung zum Losdrehen der Schraube (44, 84) entgegengesetzt zu einer Drehrichtung zum Reduzieren der Klemmlänge (K_{L}) des Spannelement (62) ist.

13. Scharnier (10) nach einem der Ansprüche 11 oder 12, **dadurch gekennzeichnet, dass** die in eines der Klappenteile (14, 16) einzuschraubende Schraube (44, 84) einen ersten, sich an ein Gewinde (86) der Schraube (44, 84) anschließenden Absatz (104) sowie einen in axialer Richtung (90) der Schraube (44, 84) vom ersten Absatz (104) beabstandeten, und insbesondere von einem Schraubenkopf (88) der Schraube (44, 84) gebildeten, zweiten Absatz (106) aufweist, wobei der Abstand (d) zwischen den beiden Absätzen (104, 106) größer ausgebildet ist als eine von dem zumindest in der Normalstellung in axialer Richtung (90) der Schraube (44, 84) zwischen dem einem Klappenteil (16) und dem zweiten Absatz (10&) angeordneten anderen Klappenteil (14) und von dem zumindest in der Normalstellung in axialer Richtung (90) der Schraube (44, 84) zwischen dem einem Klappenteil (16) und dem zweiten Absatz (106) angeordneten Spannelement (62) bei reduzierter Klemmlänge (K_{L}) des Spannelements (66) bereitgestellte Klemmlänge.

14. Scharnier (10) nach einem der Ansprüche 1 bis 13, **dadurch gekennzeichnet, dass** zumindest eines der Klappenteile (14, 16) und/oder das Spannelement (66) zumindest eine Einschubschräge (108, 110) aufweist, mittels welcher das Spannelement (66) bei einer Bewegung des Klappenteils (14, 16) von der Schutzstellung in die Normalstellung gegebenenfalls aus einer die Normalstellung blockierenden Position in eine die Normalstellung freigebenden Position verschiebbar ist.

## Claims

1. A hinge (10) for a bonnet of a motor vehicle, with a first flap part (14) and with at least a second flap part (16) which are articulated together and are movable relative to one another between a normal position and a protection position, with a holding device (42) by which the flap parts (14, 16) are held in the normal position, and with at least one actuating device (52) which can cause the flap parts (14, 16) to move out of the normal position into the protection position, **characterised in that** in the normal position, the two flap parts (14, 16) are mutually fixed and braced against one another by a tensioning element (62) of the holding device (42) under the effect of a holding force between the flap parts (14, 16), it being possible for a clamping length (K_{L}) of the tensioning element (62) to be reduced in order to cancel the holding force of the holding device (42) between the flap parts (14, 16).

2. A hinge (10) according to claim 1, **characterised in that** the holding force of the holding device (42) between the flap parts (14, 16) can be cancelled before the flap parts (14, 16) move relative to one another.

3. A hinge (10) according to either of claims 1 or 2, **characterised in that** the holding force can be cancelled by rotating the tensioning element (62) relative to at least one of the flap parts (14, 16).

4. A hinge (10) according to any one of claims 1 to 3, **characterised in that** the tensioning element (62) comprises two mutually corresponding tensioning parts (64, 66), it being possible for the clamping length (K_{L}) of the tensioning element (62) to be reduced by a movement of the tensioning parts (64, 66) relative to one another.

5. A hinge (10) according to claim 4, **characterised in that** the clamping length (K_{L}) can be reduced by a rotation of the tensioning parts (64, 66) relative to one another.

6. A hinge (10) according to either of claims 4 or 5, **characterised in that** the tensioning parts (64, 66) have in each case at least one tooth system (92, 94) which, in a first position of the tensioning parts (64, 66) relative to one another, rest against each other at the end face, which are not meshing with one another and which are movable while meshing with one another by rotating the tensioning parts (64, 66) relative to one another into a further relative position in order to reduce the clamping length (K_{L}).

7. A hinge (10) according to any one of claims 4 to 6, **characterised in that** at least one of the tensioning parts (64, 66) has at least one stop (100) which can prevent a movement of the tensioning parts (64, 66) relative to one another in at least one spatial direction.

8. A hinge (10) according to any one of claims 4 to 7, **characterised in that** at least one of the tensioning parts (64, 66) has at least one anti-twist device (68, 74) which can prevent a movement of the tensioning parts (64, 66) relative to at least one of the flap parts (14, 16).

9. A hinge (10) according to any one of claims 4 to 8, **characterised in that** the holding force can be cancelled by rotating at least one of the tensioning parts (64, 66) of the tensioning element (62) relative to at least one of the flap parts (14, 16).

10. A hinge (10) according to any one of claims 4 to 9, **characterised in that** the actuating device (52) comprises at least one actuating element (78) which can be rotated relative to at least one of the flap parts (14, 16) and to which one of the tensioning parts (64, 66) is connected for co-rotation at least in the normal position.

11. A hinge (10) according to any one of claims 1 to 10, **characterised in that** the flap parts (14, 16) are braced against one another by at least one screw (44, 84).

12. A hinge (10) according to claim 11, **characterised in that** a rotational direction for loosening the screw (44, 84) is opposite a rotational direction for reducing the clamping length (K_{L}) of the tensioning element (62).

13. A hinge (10) according to either claim 11 or claim 12, **characterised in that** the screw (44, 84) which is to be screwed into one of the flap parts (14, 16) has a first shoulder (104) adjoining a thread (86) of the screw (44, 84) as well as a second shoulder (106) which is at a distance from the first shoulder (104) in the axial direction (90) of the screw (44, 84) and is formed in particular by a screw head (88) of the screw (44, 84), wherein the distance (d) between the two shoulders (104, 106) is greater than a clamping length provided by the other flap part (14) which is arranged between the one flap part (16) and the second shoulder (106) at least in the normal position in the axial direction (90) of the screw (44, 84) and by the tensioning element (62) which is arranged between the one flap part (16) and the second shoulder (106) at least in the normal position in the axial direction (90) of the screw (44, 84), when the clamping length (K_{L}) of the tensioning element (66) is reduced.

14. A hinge (10) according to any one of claims 1 to 13, **characterised in that** at least one of the flap parts (14, 16) and/or the tensioning element (66) has at least one insert bevel (108, 110), by which the tensioning element (66) can be moved, if necessary, out of a position which blocks the normal position into a position which frees the normal position when the flap part (14, 16) moves out of the protection position into the normal position.

## Revendications

1. Charnière (10) pour le capot avant d'un véhicule comprenant une première partie de volet (14) et au moins une seconde partie de volet (16) qui sont articulées l'une sur l'autre et sont mobiles l'une par rapport à l'autre entre une position normale et une position de protection, un dispositif de retenue (42) permettant de maintenir les parties de volet (14, 16) dans la position normale ainsi qu'au moins un dispositif d'actionnement (52) permettant d'effectuer un déplacement des parties de volet (14, 16) de la position normale vers la position de protection,
**caractérisée en ce que**
les deux parties de volet (14, 16) sont réciproquement fixées dans la position normale par l'intermédiaire d'un élément de serrage (62) du dispositif de retenue (42) sous l'action d'une force de retenue entre ces parties de volet (14, 16) et sont serrées ensemble et, pour supprimer la force de retenue du dispositif de retenue (42) entre les parties de volet (14, 16) la longueur de serrage (K_{L}) de l'élément de serrage (62) peut être réduite.

2. Charnière (10) conforme à la revendication 1,
**caractérisée en ce que**
la force de retenue du dispositif de retenue (42) entre les éléments de volet (14, 16) peut être supprimée avant déplacement des parties de volet (14, 16) l'une par rapport à l'autre.

3. Charnière (10) conforme à l'une des revendications 1 et 2,
**caractérisée en ce que**
la force de retenue peut être supprimée par rotation de l'élément de serrage (62) par rapport à au moins l'une des parties de volet (14, 16).

4. Charnière (10) conforme à l'une des revendications 1 à 3,
**caractérisée en ce que**
l'élément de serrage (62) comprend deux parties de serrage (64, 66) correspondantes, la longueur de serrage (K_{L}) de l'élément de serrage (62) pouvant être réduite par un déplacement relatif des parties de serrage (64, 66) l'une par rapport à l'autre.

5. Charnière (10) conforme à la revendication 4,
**caractérisée en ce que**
la longueur de serrage (K_{L}) peut être réduite par une rotation relative des parties de serrage (64, 66) l'une par rapport à l'autre.

6. Charnière (10) conforme à l'une des revendications 4 et 5,
**caractérisée en ce que**
les parties de serrage (64, 66) comportent, chacune, au moins une denture (92, 94), et ces dentures (92, 94) s'appliquent frontalement l'une contre l'autre dans une première position relative des parties de serrage (64, 66) dans laquelle elles ne sont pas en prise l'une avec l'autre et peuvent être déplacées pour être mises en prise l'une avec l'autre de façon à réduire la longueur de serrage (K_{L}) par rotation des parties de serrage (64, 66) l'une par rapport à l'autre, dans une autre position relative.

7. Charnière (10) conforme à l'une des revendications 4 à 6,
**caractérisée en ce que**
au moins l'une des parties de serrage (64, 66) comporte au moins une butée (100) permettant d'empêcher un déplacement relatif des parties de serrage (64, 66) l'une par rapport à l'autre dans au moins une direction spatiale.

8. Charnière (10) conforme à l'une des revendications 4 à 7,
**caractérisée en ce que**
au moins l'une des parties de serrage (64, 66) comprend au moins un élément de sécurité anti-rotation (68, 74) permettant d'empêcher une rotation relative de la partie de serrage (64, 66) par rapport à au moins l'une des parties de volet (14, 16).

9. Charnière (10) conforme à l'une des revendications 4 à 8,
**caractérisée en ce que**
la force de retenue peut être supprimée par rotation d'au moins une partie de serrage (64, 66) de l'élément de serrage (62) par rapport à au moins l'une des parties de volet (14, 16).

10. Charnière (10) conforme à l'une des revendications 4 à 9,
**caractérisée en ce que**
le dispositif d'actionnement (52) comporte au moins un élément d'actionnement (78) mobile en rotation par rapport à au moins l'une des parties de volet (14, 16) et avec lequel l'une des parties de serrage (64, 66) est reliée solidairement en rotation au moins dans la position normale.

11. Charnière (10) conforme à l'une des revendications 1 à 10,
**caractérisée en ce que**
les parties de volet (14, 16) sont serrées ensemble au moyen d'au moins une vis (44, 84).

12. Charnière (10) conforme à la revendication 11,
**caractérisée en ce que**
le sens de rotation permettant de desserrer la vis (44, 84) est opposé au sens de rotation permettant de réduire la longueur de serrage (K_{L}) de l'élément de serrage (62).

13. Charnière (10) conforme à l'une des revendications 11 et 12,
**caractérisée en ce que**
la vis (44, 84) devant être vissée dans l'une des parties de volet (14, 16) comporte un premier segment (104) se connectant à un filetage (86) de cette vis (44, 84) ainsi qu'un second segment (106) situé à distance du premier segment (104) dans la direction axiale (90) de cette vis (44, 84) et formé en particulier par la tête (88) de la vis (44, 84), la distance (d) entre les deux segments (104, 106) est supérieure à la longueur de serrage fournie par l'une des parties de volet (14) située entre l'autre partie de volet (16) et le second segment (106) au moins dans la position normale, dans la direction axiale (90) de la vis (44, 84) et par l'élément de serrage (62) situé entre la partie de volet (16) et le second segment (106) au moins dans la position normale dans la direction axiale (90) de la vis (44, 84) pour la longueur de serrage (Kl) réduite de l'élément de serrage (66).

14. Charnière (10) conforme à l'une des revendications 1 à 13,
**caractérisée en ce que**
au moins l'une des parties de volet (14, 16) et/ou l'élément de serrage (66) comprend au moins un biseau d'insertion (108, 110) au moyen duquel l'élément de serrage (66) peut être déplacé par coulissement lors d'un déplacement de la partie de volet (14, 16) de la position de protection dans la position normale, le cas échéant à partir d'une position bloquant la position normale dans une position de libération de la position normale.
